# EUROPEAN PATENT SPECIFICATION

(11) **EP 1 580 859 B1**
(45) Date of publication and mention of the grant of the patent: **01.06.2016**
(21) Application number: 05101691.3
(22) Date of filing: 04.03.2005
(51) Int. Cl.: H02H 3/07

(54) **Method and system for controlling reclosings**
Verfahren und Vorrichtung zum Steuern des Wiedereinschaltens
Procédé et système de contrôle de réenclenchement

(30) Priority: 23.03.2004 FI 20040445
(43) Date of publication of application: 28.09.2005
(73) Proprietor: ABB Oy, 00380 Helsinki (FI)
(72) Inventor: Lehesvuo, Veikko, 65100, Vaasa (FI)
(74) Representative: Kolster Oy Ab

(56) References cited:
- US-A- 4 454 556
- US-A1- 2002 133 304
- US-B1- 6 239 960

## Description

### FIELD OF THE INVENTION

The invention relates to controlling reclosings in electric distribution and transmission systems.

### BACKGROUND OF THE INVENTION

In electric networks, fast automatic elimination of faults is of essential significance to the safety and reliability of electric supply. For this purpose, transmission and distribution networks are equipped with protection systems that open the circuit breaker closest to the fault. However, experience has shown that a majority of overhead line network faults are transient by nature and can be repaired by disconnecting the location of the fault for a moment.

Automatic reclosing (auto-reclosing) refers to a step, in which, after a protection relay has tripped a circuit breaker, it is automatically reclosed after a preset time. The primary goal in using reclosures is to automatically restore the network to the state prior to the fault; in other words, to restore electric supply. If the fault disappears during the reclosure, the network can be restored to normal. If the fault does not disappear, the reclosure is followed by a new protection relay action and possibly another reclosure. The operation continues as described above until the fault disappears or the maximum number of reclosures is made. If the fault is permanent and after all the reclosing attempts are made, the protection relay trips the circuit breaker once more (final trip to lock-out), and the sequence ends. After this, restoring the network to normal state usually requires the actions of the operating staff.

In this application, the term 'reclosing block' refers to the part of reclosing automatics that contains all initiation automatics required for one single reclosing attempt (e.g. high-speed auto-reclosing or delayed auto-reclosing), but does not typically contain the automatics common to all reclosing attempts. A reclosing dead time delay is also associated with the reclosing block, either through inclusion or in another way.

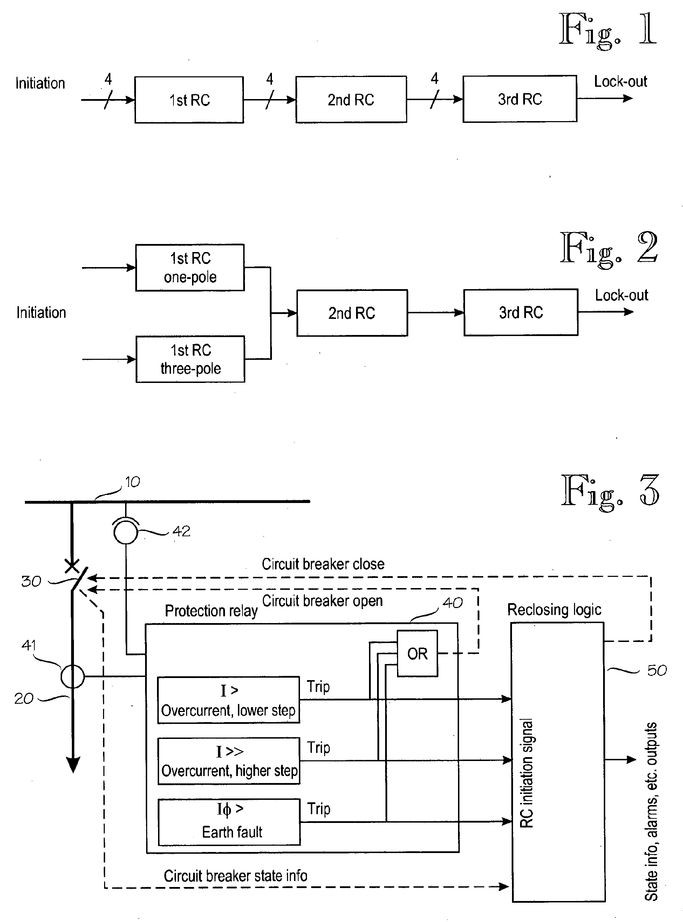

Figure 1 shows one of the most conventional known solu-tions for implementing a reclosing sequence. The term reclosing sequence refers generally to a predefined initiation order of reclosing blocks. More than one reclosing blocks may be used in such a manner, for instance, that there are different sequences for different fault types. The simple reclosing sequence shown in the figure, with one high-speed and two delayed reclosures, is produced by using three consecutively connected reclosing blocks. In the solution of Figure 1, four inputs are available to initiate the reclosure, but the inputs can only initiate or not initiate a reclosing block. In the sequence, it is only possible to select one route that proceeds from one block to the next. In a sequence, one block can be skipped, but the relative order of the blocks cannot be selected or changed. Regardless of the fault type (in other words, used input), the behaviour of the blocks and the related reclosing dead time delays are the same. US 4454556, against which the preamble is based on, discloses a timing controller for a recloser relay. In the disclosed solution a timing controller supervises the reclosure of a fault responsive circuit breaker which includes a plurality of selectable switches for developing signals representing the reset and reclose delay times for the recloser relay operatively associated with the fault responsive circuit breaker, a plurality of multiplexers for receiving the signals developed by the selectable switches and for developing serially formatted digital words in accordance with such signals for delivery to an output controlling multiplexer, a first counter assembly for regulating the output of the output controlling multiplexer in accordance with the condition of the recloser relay, a storage device for receiving and storing the output of the output controlling multiplexer, and a comparison device for comparing the stored output of the output controlling multiplexer with a second counter assembly which develops a timed output signal. Successful comparison of these signals produces an output signal for supervising the operation of the recloser relay.

Transmission networks, in turn, typically require one-, two- or three-pole reclosures, in which the time of the first reclosure may depend on the number of poles in the fault (in other words, whether it is a one-, two-, or three-phase fault). In a one-pole reclosure, the length of the high-speed reclosing dead time should typically be longer than in a two- or three-pole reclosure. The known solutions have solved this by connecting reclosing blocks in parallel, as illustrated in the example of Figure 2. Now depending on which of the two initiation inputs shown in Figure 2 is used, a different sequence is provided for the first reclosure. If by using the same automatics, different reclosing sequences are wanted where a first is allowed to have a one-pole high-speed reclosure and three-pole high-speed and delayed reclosures, but a second only a three-pole delayed reclosure, and a third high-speed and delayed reclosures in all situations, this can be implemented by assembling each sequence separately and selecting one of them for use as necessary. A problem with the above-mentioned solution is that if it became necessary to add one or more sequences, the reclosing relay (module or functional block) would need to be redesigned for that part, because the sequences are formed of consecutively concatenated reclosing blocks, and they cannot easily be altered by the user of the system, for instance.

### BRIEF DESCRIPTION OF THE INVENTION

It is thus an object of the invention to develop a method and an apparatus implementing the method so as to solve or at least alleviate the above-mentioned problem. The object of the invention is achieved by a system and method that are characterized by what is stated in the independent claims 1 and 10. Preferred embodiments of the invention are disclosed in the dependent claims.

The invention is based on the fact that one or more reclosing blocks comprise first and second parameters that preferably have one or more predefined block-specific values so that the reclosing block can be initiated by feeding to it a first signal corresponding to the value of the first parameter and a second signal corresponding to the value of the second parameter. According to the basic idea of the invention, the reclosing blocs are thus not fixedly concatenated according to the initiation order, but the initiation order of the reclosing blocks, i.e. one or more reclosing sequences, is determined on the basis of the parameter values.

The method and system of the invention provides the advantage that the initiation sequence(s) can easily be formed by only changing the parameter settings of the reclosing blocks. In addition, a reclosing sequence can be formed freely within certain marginal terms (e.g. the number of available reclosing blocks) without in any way limiting in advance the type, number or order of the reclosing blocks in a single sequence. Further, due to the invention, no other changes than the above-mentioned parameter value changes are required in the reclosing relay (module or functional block) to form a new sequence. Due to the invention, it is possible to form in a simple and flexible manner optimal and independent reclosing sequences for different fault situations in an electric network.

### BRIEF DESCRIPTION OF THE FIGURES

The invention will now be described in greater detail by means of preferred embodiments and with reference to the attached drawings, in which:
Figure 1 shows a block diagram of a prior-art reclosing block connection,
Figure 2 shows a block diagram of a prior-art reclosing block connection,
Figure 3 shows a primary diagram of an electric system in which the invention can be used,
Figure 4 shows a block diagram of a reclosing logic according to one embodiment of the invention,
Figure 5 shows a block diagram of a reclosing block connection according to an embodiment of the invention,
Figure 6 shows a block diagram of a reclosing block connection according to an embodiment of the invention,
Figure 7 shows a block diagram of an internal reclosing block connection according to an embodiment of the invention, and
Figure 8 shows an example matrix configuration of reclosing blocks according to an embodiment of the invention.

### DETAILED DESCRIPTION OF THE INVENTION

Figure 3 shows a primary diagram of an electric system in which the invention can be used. It should be noted that the system in the figure is just an example of a system in which the invention can be used, and the invention is thus in no way limited to the shown system, but can be used with different electric distribution and transmission systems. It should also be noted that the figure shows only the elements of the system that are necessary to understand the invention. It is clear that the system can comprise an arbitrary number of the shown elements and other elements than those shown in the figure.

The system of Figure 3 comprises a substation busbar 10 and an outgoing feeder 20. The system is typically a three-phase system, even though the phases are not separately shown in the figure for the sake of clarity. The system further comprises a circuit breaker 30, with which the outgoing feeder 20 can be disconnected from the supplying busbar 10. The figure also shows a protection arrangement that comprises a protection relay 40 and current transformers 41 and a voltage transformer 42 connected thereto. In this example, the protection relay 40 comprises a two-step overcurrent protection and an earth fault protection. The system also comprises a reclosing logic for making reclosures by means of the circuit breaker 30; the circuit breaker 30 thus serves as an actuator that performs the physical reclosing function. The connection essentially works as follows: when the protection relay 40 operates, one of its trip signals opens the circuit breaker 30. The trip signals are also transmitted to a reclosing logic 50 that closes the circuit breaker 30 in accordance with the reclosing plan. If the fault situation continues, several reclosing attempts can be made depending on the reclosing sequence used by the reclosing logic at each time. In the example of the figure, protection trip signals are used as reclosure initiation signals, but (typically delayed) protection start signals could be used just as well. In addition, in the example of the figure, the circuit breaker 30 is tripped by the protection relay 40 (closing control from the reclosing logic), but the tripping can also be done by the reclosing logic 50. The operation of the system of Figure 3 is assumed to be apparent as such to a person skilled in the art, so it is not described in more detail herein. The protection relay 40 can be any type of protection relay and its implementation is not significant to the basic idea of the invention. Similarly, the circuit breaker 30 can be any type of controllable switching device. The circuit breaker 30 can for instance be a three-phase switching device or a combination of three separate one-phase switching devices. The reclosing logic 50 of the invention, described in more detail in the following, can in turn be implemented for instance with separate components, specific integrated circuits, or a microprocessor and an appropriate software.

The solution of the invention aims at breaking free of the fixed location and order of the reclosing blocks at a given point of the reclosing sequence. In the solution of the invention, the desired sequences can instead be constructed from a large number (e.g. ten or fifteen) of essentially similar reclosing blocks. No block is preferably fixed to a given point in the sequence, but can be freely selected (set) at any desired point. In the solution of the invention, the reclosing blocks act in a way as building blocks, from which the desired outcome is built. The building platform, on which the blocks are fastened, can be described or perceived as a matrix, even though the practical implementation were not necessarily in accordance with the matrix concept.

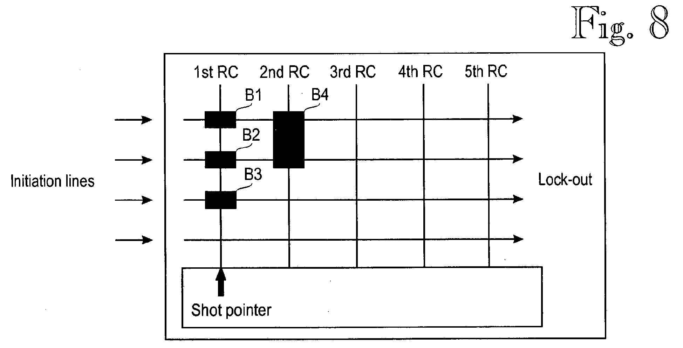

Figure 8 shows an example matrix configuration having four reclosing blocks B1 to B4. In a matrix presentation, each row corresponds to one reclosing initiation signal and the columns correspond to the progress of the sequence from the first reclosing attempt (1^{st} RC) to the last (5^{th} RC). Different initiation signals are preferably activated by faults of different type, for instance on the basis of the polarity of the fault (one-, two-, or three-pole faults; transmission network applications) and/or the nature of the fault (overcurrent, earth fault, short circuit; distribution network applications). These form paths in the matrix, along which the reclosing sequence progresses. A change in the fault type during a sequence is shown as a change of path. In this matrix concept, each reclosing block is essentially the same and contains, as a setting, information on where in the sequence (in which column) the block is. A setting is also required to indicate the path (row) the block is on. If the block is also allowed to be on several paths at the same time (in other words, the block can be initiated with more than one initiation signal), the number of blocks can be kept small. The block is in a way stretched over one, two, or several rows, like one of the blocks (B4) in the example of Figure 8.

Managing the progress of the sequence and initiating the correct one of the reclosing blocks on the path can be done for instance by using a separate sequence counter, or shot pointer. Initially, the shot pointer is at value 1 and allows the initiation of the first reclosure (the blocks programmed for the first column). After each reclosure, the shot pointer is set to a value that prevents the initiation of the just performed block and those before it in the sequence.

The dynamics of the reclosing automatics of the invention can be further increases by permitting the initiation of any block allowed by the shot pointer and those after it in the sequence. It is then possible to skip a point in the sequence. This provides the problem that there are several blocks on the same path that could be initiated. The solution to this can be found in the observation that, when several initiation signals are simultaneously active (e.g. both earth fault protection and short-circuit protection start in a line-to-line-to-earth fault), it is already in advance perfectly clear and definable which of these is the most important. It is possible to define in advance that the most important (e.g. the severest fault type) should be made to activate the first initiation signal, the severest after that to activate the second signal and so on. The initiation inputs thus preferably have a specific order of "severity". The decision on which reclosing block to initiate can then be made by finding the first block starting from the top left corner and proceeding from top to bottom and left to right. In practice, the reclosing blocks can preferably be given an individual number, the reclosing blocks can be positioned according to their numeric order for instance from top to bottom and left to right, and the block with the smallest (or largest) number can always be selected for initiation.

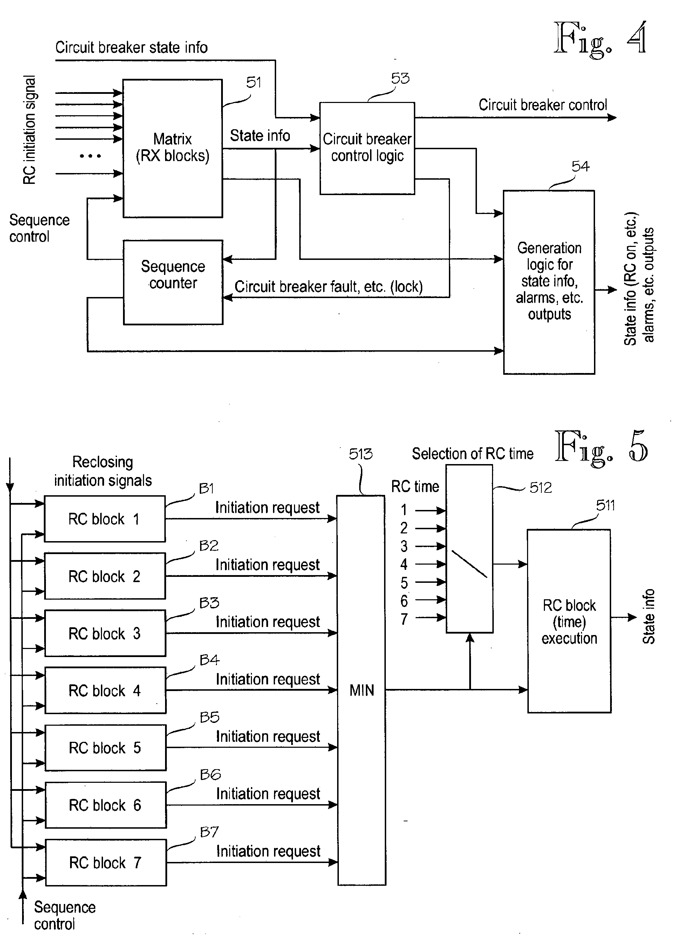

Figure 4 shows a block diagram of a reclosing logic according to an embodiment of the invention. As already stated earlier, the reclosing logic can be implemented for instance with separate components, specific integrated circuits, or a microprocessor and appropriate software. Correspondingly, the different elements of the reclosing logic can for instance be implemented with separate components or by program, without affecting the basic idea of the invention. The reclosing logic comprises a matrix 51 comprising reclosing blocks and receiving signals from the protection relay, for instance. The reclosing logic further comprises a sequence counter 52 that counts the number of reclosing attempts and generates a sequence control signal (shot pointer) on the basis of the number, which is also transmitted to the matrix 51. Another type of implementation can be used instead of the counter, for instance a state machine whose state, reading, or another type of output information is used in the system to control the progress of the sequence in a desired manner. The reclosing logic also comprises a control logic 53 of the circuit breaker 30, which controls the circuit breaker 30 on the basis of the state information received from the matrix 51. The control logic 53 thus generates the required control signal to close the circuit breaker 30 after having received from the matrix 51 state information that indicates this is required. Before the control signal is generated, the control logic 53 can perform various checks and generate the control signal only after certain additional conditions are met. The control logic 53 can for instance first check that the spring of the circuit breaker 30 is cocked, if the circuit breaker is spring-operated. The control logic 53 receives this information for instance directly from the circuit breaker 30, as shown in the figure. The circuit breaker is thus not necessarily closed immediately when the time associated with a certain reclosing block has expired since the initiation of the block. Time information associated with a reclosing block generally only indicates the minimum time from the initiation of the block to closing the circuit breaker 30, and, in practice, the time from the initiation of the reclosing block to the closing of the circuit breaker 30 can be longer than the time information associated with the reclosing block, depending on the system delays due to the above-mentioned possible additional checks. The figure also shows logic 54 that generates state information and alarms, by means of which the state information of the reclosing logic can be transmitted to the other parts of the system.

Figure 5 shows a block diagram of reclosing block connection, i.e. of the matrix 51, according to an embodiment of the invention. The example of Figure 5 comprises seven reclosing blocks (initiation logics) B1 to B7. Each block B1 to B7 comprises two signal inputs, the first of which receives initiation signals from the protection relay, for instance, and the second receives the signal from the sequence counter 52. The first input receives one or more initiation signals (first signal). The sequence control signal (second signal) received at the second input from the sequence counter 52 preferably indicates the number of the reclosing attempt. According to the basic idea of the invention, at least one reclosing block, in this example each reclosing block B1 to B7, comprises a first parameter and a second parameter that preferably have one or more predefined block-specific values. The reclosing blocks B1 to B7 are further arranged to initiate in response to receiving a first signal corresponding to the value of the first parameter and a second signal corresponding to the value of the second parameter. In other words, the blocks B1 to B7 comprise, for instance stored in their memory, two parameters that each can have one or more predefined block-specific values. The reclosing block is initiated when a first signal arrives at its first input, the value of which corresponds to a value of the first parameter stored in the memory, and a second signal arrives at its second input, the value of which corresponds to a second parameter value stored in the memory. The example of Figure 5 further comprises a block 513, which, if several blocks initiate simultaneously, selects from the signals coming from the reclosing blocks B1 to B7 the signal that has the highest priority (e.g. in the example of the figure, the one with the smallest number) and transmits it on to a reclosure execution block 511, which also receives the reclosure time information associated with the selected reclosing block from a block 512. The block 512 receives the reclosure time information associated with each reclosing block B1 to B7 from inputs 1 to 7, and, when it gets the number of the selected reclosing block as input from the block MIN, it selects the corresponding time information and feeds it to the reclosure execution block 511. Alternatively, time information could also be in the reclosing blocks B1 to B7, for instance. The reclosure execution block 511 manages the execution of the time relating to the reclosing and generates in its output corresponding state information that indicates for instance that reclosing is in progress or finished. This state information is transmitted to the control logic 53 of the circuit breaker, for instance, to generate the required control signals to the circuit breaker 30, as described above.

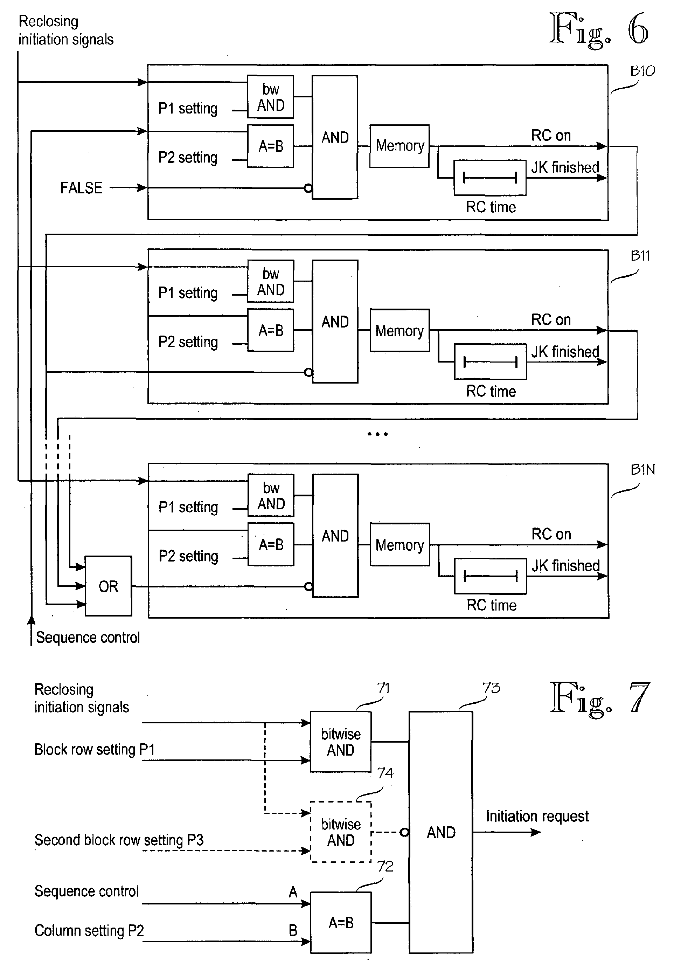

Figure 7 shows a block diagram of an internal reclosing block B1 to B7 connection according to an embodiment of the invention. A reclosing block comprises two signal inputs, the first of which receives one or more initiation signals, i.e. first signal, from the protection relay, for instance, and the second receives a control signal, i.e. second signal, from the sequence counter 52. The reclosing block also comprises a first parameter (P1) and a second parameter (P2) having one or more predefined block-specific values. In the example of Figure 7, the system signals are assumed to be in digital format, whereby one bit (and thus a value corresponding to the bit position in a binary number) is reserved for each of the one or more possible initiation signals coming to the first input so that the bit value is one, if the initiation signal is active and, otherwise, it is zero. In other words, the first input preferably receives a binary number, in which the individual bit values (1 or 0) depend on the state (active or inactive) of the initiation signals (first signals) corresponding to the bits. In a similar manner, the block-specific values (one or more) of the parameter P1 can be presented as one binary number, whereby each bit represents one possible parameter value and indicates, whether said value (and thus also the first signal having the same value) is allowed for the block or not. A comparison element 71 (bitwise AND, i.e. a binary AND operation) compares the binary representation of the first input with the binary representation of the values of the first parameter P1, and if at least one bit is found having value 1 both in the first input and the setting of the parameter P1 (i.e. at least one first signal is active, whose value corresponds to a value of the first parameter P1), the output of the comparison element 71 is 1. A comparison element 72, in turn, compares the second signal (sequence control) with the second parameter P2. The output of the comparison element 72 is preferably 1, if the value of the second signal corresponds to the value of the second parameter P2. Alternatively, or in addition to this, several permitted values can be defined for the second parameter in the form of a value range, for instance, in such a manner that the value of the second signal should be smaller or equal to the value of the second parameter P2 to make the output of the comparison element 72 1. An AND element 73 generates an initiation request when the outputs of both comparison elements 71 and 72 are 1. The connection of Figure 7 also shows a third parameter P3 according to a preferred embodiment of the invention, which may have one or more predefined block-specific values like the parameter P1. As shown in the connection of Figure 7, the generation of an initiation request can be prevented with a comparison element 74, when the value (one or more) of the third parameter P3 corresponds to a value of the first signal entering the first input.

Figure 6 shows a block diagram of a reclosing block connection, i.e. matrix 51, according to another embodiment of the invention. The example of Figure 6 comprises reclosing blocks B10 to B1N. Like in the example of Figure 5, each block B10 to B1 N comprises two signal inputs, the first of which receives initiation signals from the protection relay, for instance, and the second receives a control signal from the sequence counter 52. According to the basic idea of the invention, at least one - in this example, each - reclosing block B10 to B1 N comprises a first parameter (P1) and a second parameter (P2) that preferably have one or more predefined block-specific values, whereby the reclosing blocks B10 to B1 N are arranged to initiate in response to receiving a first signal corresponding to the value of the first parameter and a second signal corresponding to the value of the second parameter. In other words, like in the example of Figure 5, the blocks B10 to B1 N comprise, for instance stored in their memory, two parameters that each can have one or more predefined block-specific values. A reclosing block is initiated when a first signal arrives at its first input, and the value of the signal corresponds to a first parameter value stored in the memory, and a second signal arrives at its second input, and the value of the signal corresponds to a second parameter value stored in the memory. When initiating, the reclosing block prevents the simultaneous initiation of reclosing blocks that follow it and preferably have a lower priority (or generally any other blocks), which means that only one of the blocks B10 to B1 N can be on at a time. In this example, the blocks B10 to B1 N contain the reclosing time information, whereby the initiated block manages the execution of the time related to the reclosing and generates in its output corresponding state information that indicates for instance that reclosing is in progress or finished. The initiation of the reclosing block is preferably stored in the memory of the block, because the initiation signal(s) from the relay disappears when reclosing starts. The memory is preferably reset in this respect, when the circuit breaker 30 is closed, i.e. the reclosing is finished.

According to a preferred embodiment of the invention, block-specific information on the number of poles in the reclosure is also associated with each reclosing block B1 to B7 and B10 to B1 N in such a manner that the control signal to close the circuit breaker 30 is generated in accordance with the information on the number of poles. In other words, information can be attached to the reclosing blocks on whether the reclosure initiated by the block should be one-, two-, or three-phased. The circuit breaker 30 should then naturally be one that permits a one-phase operation, for instance. Alternatively, it is possible to check in block 53 which of the poles of the circuit breaker 30 are open and to close them.

The parameters and settings (or at least some of them) associated with the reclosure control system of the invention, such as the parameter settings P1 and P2 of the reclosing blocks, the reclosing time settings and the possible settings of the number of poles in the reclosure, are preferably made to be settable by the user of the system. This can be implemented by means of a suitable user interface. Depending on whether the system is implemented for instance with separate components, microprocessor or a computer and an appropriate software, performing the settings can be done with separate switches and controls or the like, as is done in conventional protection systems, or by means of a specific graphical user interface, for instance. For the graphical user interface, the reclosing logic 50 preferably comprises (not shown in the figures) a suitable interface for a display and keyboard or PC, for instance, by means of which the user can easily set the reclosing sequences formed by reclosing blocks (by setting the parameters P1 and P2) and other required settings. This type of graphical user interface can show the connections made by the reclosing blocks in a matrix presentation, as in Figure 8, or in some other suitable manner.

According to one embodiment of the invention, the parameters P1 and P2 can be set in advance, for instance during the making of the system, in such a manner that the user cannot change the settings. It is then possible to form in advance a matrix of a certain size, for instance one containing 20 reclosing blocks and with 4 rows and 5 columns. Each block is then set in its own place in the matrix by using the parameter settings P1 and P2. The user of the system can form the desired reclosing sequences by activating, i.e. switching on or generally into readiness, only the required reclosing blocks. For instance, a connection corresponding to that of the example of Figure 8 can be provided by activating the first two blocks on the left on rows 1 and 2 each, and the first block on row 3. The activation/deactivation of the blocks can be performed with a block-specific parameter reserved for this purpose, by switching the blocks on/off, or in another suitable manner. When using this embodiment, the internal operation and interaction of the activated reclosing blocks also essentially correspond to those presented in the examples described above.

It is apparent to a person skilled in the art that as technology advances, the basic idea of the invention can be implemented in many different ways. The invention and its embodiments are thus not limited to the examples described above, but may vary within the scope of the claims.

## Claims

1. A system for controlling reclosings, the system comprising at least two reclosing blocks (B1 to B7; B10 to B1 N), each block having predefined block-specific reclosing time information associated with it, whereby the system is arranged to generate a control signal to close a switching means (30) able to perform a reclosing after the time corresponding to the time information, associated with the reclosing block, has expired since the initiation of the reclosing block in question, **characterized in that**
each block being arranged to initiate in a predefined order;
and **in that**
at least one reclosing block comprises a first parameter (P1) and a second parameter (P2), whereby the reclosing block is arranged to initiate in response to receiving a first signal corresponding to the value of the first parameter and a second signal corresponding to the value of the second parameter, wherein
the first signal indicates a fault type;
the reclosing blocks (B1 to B7; B10 to B1 N) are arranged to receive the first signal from one or more protection relays (40); and
the second signal indicates a sequence number of the reclosing attempt.

2. A system as claimed in claim 1, **characterized in that** the first parameter (P1) and the second parameter (P2) of said at least one reclosing block has one or more predefined block-specific values.

3. A system as claimed in claim 1 or 2, **characterized in that** the system comprises a counter (52) arranged to count the number of the reclosing attempts and to generate the second signal on the basis of the number.

4. A system as claimed in any one of claims 1 to 3, **characterized in that** the system comprises means (513) arranged to select the reclosing block that has the highest priority, when two or more reclosing blocks (B1 to B7) initiate essentially simultaneously, whereby the system is arranged to generate a control signal to close the switching means (30) performing the reclosing after the time corresponding to the time information associated with the reclosing block has expired since the initiation of the reclosing block.

5. A system as claimed in claim 4, **characterized in that** the reclosing blocks comprise a sequence number that indicates the priority of the block.

6. A system as claimed in any one of claims 1 to 5, **characterized in that** the reclosing blocks (B10 to B1 N) are arranged after initiation to prevent an essentially simultaneous initiation of reclosing blocks that have a lower priority.

7. A system as claimed in any one of claims 1 to 6, **characterized in that** the first parameter and/or the second parameter of the reclosing blocks (B1 to B7; B10 to B1 N) and/or the time information associated with the reclosing blocks are settable by the user of the system.

8. A system as claimed in any one of claims 1 to 7, **characterized in that** the system comprises block-specific information associated with each block (B1 to B7; B10 to B1 N) concerning the number of poles in the reclosing, whereby the system is arranged to generate a control signal to close the switching means (30) in accordance with the information on the number of poles.

9. A system as claimed in any one of claims 1 to 8, **characterized in that** one or more reclosing blocks (B1 to B7; B10 to B1 N) comprises a third parameter (P3) having one or more predefined block-specific values, whereby the reclosing block is arranged to lock in response to receiving a first signal corresponding to the value of the third parameter.

10. A method for controlling reclosings by means of a control system comprising at least two reclosing blocks, each block having predefined block-specific reclosing time information associated with it, whereby the method comprises the steps of:
generating a control signal to close a switching means (30) performing a reclosing after the time corresponding to the time information associated with the reclosing block has expired since the initiation of the reclosing block in question, **characterized by** initiating reclosing blocks in a predefined order and in that at least one reclosing block comprises a first parameter and a second parameter, whereby the step of initiating the reclosing blocks in a predefined order comprises the step of:
initiating the reclosing block in response to receiving a first signal corresponding to the value of the first parameter from one or more protection relays and a second signal corresponding to the value of the second parameter, wherein
the first signal indicates a fault type, and the second signal indicates a sequence number of the reclosing attempt.

11. A method as claimed in claim 10, **characterized in that** the first and second parameters of the at least one reclosing block have one or more predefined block-specific values.

12. A method as claimed in claim 10 or 11, **characterized by** counting the number of performed reclosing attempts and generating the second signal on the basis of the number.

13. A method as claimed in any one of claims 10 to 12, **characterized by** selecting the reclosing block that has the highest priority, when two or more reclosing blocks initiate essentially simultaneously, whereby a control signal to close the switching means performing the reclosing is generated after the time corresponding to the time information associated with the reclosing block has expired since the initiation of the reclosing block.

14. A method as claimed in claim 13, **characterized in that** the reclosing blocks comprise sequence numbers, and the block having the highest priority is selected on the basis of the sequence number.

15. A method as claimed in any one of claims 10 to 14, **characterized by** preventing, when the reclosing block is initiated, an essentially simultaneous initiation of reclosing blocks having a lower priority.

16. A method as claimed in any one of claims 10 to 15, **characterized by** inserting into each block block-specific information on the number of poles in the reclosure, and the control signal for closing the switching means that performs the reclosure is generated in accordance with the information on the number of poles.

17. A method as claimed in any one of claims 10 to 16, **characterized by** associating with one or more reclosing blocks a third parameter having one or more block-specific values, and locking the reclosing block in response to receiving a first signal corresponding to the value of the third parameter of the block.

## Patentansprüche

1. System zum Steuern von Wiedereinschaltungen, welches System zumindest zwei Wiedereinschaltblöcke (B1 bis B7; B10 bis B1 N) aufweist, wobei jeder Block damit verbundene vorbestimmte blockspezifische Wiedereinschaltzeitinformation hat, wobei das System angeordnet ist, ein Steuersignal zu erzeugen, um ein Schaltmittel (30) einzuschalten, das eine Wiedereinschaltung durchführen kann, wenn die der mit dem Wiedereinschaltblock verbundenen Zeitinformation entsprechende Zeit seit der Initiierung des betreffenden Wiedereinschaltblocks abgelaufen ist, **dadurch gekennzeichnet, dass**
jeder Block angeordnet ist, in einer vorbestimmten Reihenfolge initiiert zu werden;
und dass zumindest ein Wiedereinschaltblock einen ersten Parameter (P1) und einen zweiten Parameter (P2) aufweist, wobei der Wiedereinschaltblock angeordnet ist, als Reaktion auf das Empfangen eines dem Wert des ersten Parameters entsprechenden ersten Signals und eines dem Wert des zweiten Parameters entsprechenden zweiten Signals initiiert zu werden, wobei
das erste Signal einen Fehlertyp ermittelt;
die Wiedereinschaltblöcke (B1 bis B7; B10 bis B1N) angeordnet sind, das erste Signal von einem oder mehreren Schutzrelais (40) zu empfangen; und
das zweite Signal eine Folgenummer des Wiedereinschaltversuchs ermittelt.

2. System nach Patentanspruch 1, **dadurch gekennzeichnet, dass** der erste Parameter (P1) und der zweite Parameter (P2) des besagten zumindest einen Wiedereinschaltblocks einen oder mehrere vorbestimmte blockspezifische Werte haben.

3. System nach Patentanspruch 1 oder 2, **dadurch gekennzeichnet, dass** das System einen Zähler (52) aufweist, der angeordnet ist, die Anzahl der Wiedereinschaltversuche zu zählen und das zweite Signal aufgrund der Anzahl zu erzeugen.

4. System nach einem der Patentansprüche 1 bis 3, dadurch g e - **kennzeichnet**, dass das System Mittel (513) aufweist, die angeordnet sind, den Wiedereinschaltblock mit der höchsten Priorität auszuwählen, wenn zwei oder mehrere Wiedereinschaltblöcke (B1 bis B7) wesentlich gleichzeitig initiiert werden, wobei das System angeordnet ist, ein Steuersignal zu erzeugen, um das Schaltmittel (30) einzuschalten, das die Wiedereinschaltung durchführt, wenn die der mit dem Wiedereinschaltblock verbundenen Zeitinformation entsprechende Zeit seit der Initiierung des Wiedereinschaltblocks abgelaufen ist.

5. System nach Patentanspruch 4, **dadurch gekennzeichnet, dass** die Wiedereinschaltblöcke eine Folgenummer aufweisen, die die Priorität des Blocks ermittelt.

6. System nach einem der Patentansprüche 1 bis 5, dadurch g e - **kennzeichnet**, dass die Wiedereinschaltblöcke (B10 bis B1 N) angeordnet sind, nach der Initiierung eine wesentlich gleichzeitige Initiierung von Wiedereinschaltblöcken mit einer niedrigeren Priorität zu verhindern.

7. System nach einem der Patentansprüche 1 bis 6, dadurch g e - **kennzeichnet**, dass der erste Parameter und/oder zweite Parameter der Wiedereinschaltblöcke (B1 bis B7; B10 bis B1 N) und/oder die mit den Wiedereinschaltblöcken verbundene Zeitinformation von dem Benutzer des Systems einstellbar sind.

8. System nach einem der Patentansprüche 1 bis 7, dadurch g e - **kennzeichnet**, dass das System mit jedem Block (B1 bis B7; B10 bis B1 N) verbundene blockspezifische Information über die Anzahl von Polen in der Wiedereinschaltung aufweist, wobei das System angeordnet ist, ein Steuersignal zu erzeugen, um das Schaltmittel (30) gemäß der Information über die Anzahl von Polen einzuschalten.

9. System nach einem der Patentansprüche 1 bis 8, dadurch g e - **kennzeichnet**, dass ein oder mehrere Wiedereinschaltblöcke (B1 bis B7; B10 bis B1 N) einen dritten Parameter (P3) aufweisen, die einen oder mehrere vorbestimmte blockspezifische Werte haben, wobei der Wiedereinschaltblock angeordnet ist, als Reaktion auf das Empfangen eines dem Wert des dritten Parameters entsprechenden ersten Signals zu schließen.

10. Verfahren zum Steuern von Wiedereinschaltungen anhand eines Steuersystems, das zumindest zwei Wiedereinschaltblöcke aufweist, wobei jeder Block damit verbundene vorbestimmte blockspezifische Wiedereinschaltzeitinformation hat, wobei das Verfahren die Schritte aufweist, in denen:
ein Steuersignal erzeugt wird, um ein Schaltmittel (30) einzuschalten, das eine Wiedereinschaltung durchführt, wenn die der mit dem Wiedereinschaltblock verbundenen Zeitinformation entsprechende Zeit seit der Initiierung des betreffenden Wiedereinschaltblocks abgelaufen ist, **dadurch gekennzeichnet, dass** Wiedereinschaltblöcke in einer vorbestimmten Reihenfolge initiiert werden und dass zumindest ein Wiedereinschaltblock einen ersten Parameter und einen zweiten Parameter aufweist, wobei der Schritt, in dem die Wiedereinschaltblöcke in einer vorbestimmten Reihenfolge initiiert werden, den Schritt aufweist, in dem:
der Wiedereinschaltblock als Reaktion auf das Empfangen eines dem Wert des ersten Parameters entsprechenden ersten Signals von einem oder mehreren Schutzrelais und eines dem Wert des zweiten Parameters entsprechenden zweiten Signals initiiert wird, wobei
das erste Signal einen Fehlertyp ermittelt und das zweite Signal eine Folgenummer des Wiedereinschaltversuchs ermittelt.

11. Verfahren nach Patentanspruch 10, **dadurch gekennzeichnet, dass** der erste und der zweite Parameter des zumindest einen Wiedereinschaltblocks einen oder mehrere vorbestimmte blockspezifische Werte haben.

12. Verfahren nach Patentanspruch 10 oder 11, **dadurch gekennzeichnet, dass** die Anzahl von durchgeführten Wiedereinschaltversuchen gezählt wird und das zweite Signal aufgrund der Anzahl erzeugt wird.

13. Verfahren nach einem der Patentansprüche 10 bis 12, **dadurch gekennzeichnet, dass** der Wiedereinschaltblock mit der höchsten Priorität ausgewählt wird, wenn zwei oder mehrere Wiedereinschaltblöcke wesentlich gleichzeitig initiiert werden, wobei ein Steuersignal erzeugt wird, um das Schaltmittel einzuschalten, das die Wiedereinschaltung durchführt, wenn die der mit dem Wiedereinschaltblock verbundenen Zeitinformation entsprechende Zeit seit der Initiierung des Wiedereinschaltblocks abgelaufen ist.

14. Verfahren nach Patentanspruch 13, **dadurch gekennzeichnet, dass** die Wiedereinschaltblöcke Folgenummern aufweisen und der Block mit der höchsten Priorität aufgrund der Folgenummer ausgewählt wird.

15. Verfahren nach einem der Patentansprüche 10 bis 14, **dadurch gekennzeichnet, dass**, wenn der Wiedereinschaltblock initiiert wird, eine wesentlich gleichzeitige Initiierung von Wiedereinschaltblöcken mit einer niedrigeren Priorität verhindert wird.

16. Verfahren nach einem der Patentansprüche 10 bis 15, **dadurch gekennzeichnet, dass** in jeden Block blockspezifische Information über die Anzahl von Polen in der Wiedereinschaltung eingefügt wird und das Steuersignal zum Einschalten des Schaltmittels, das die Wiedereinschaltung durchführt, gemäß der Information über die Anzahl von Polen erzeugt wird.

17. Verfahren nach einem der Patentansprüche 10 bis 16, **dadurch gekennzeichnet, dass** mit einem oder mehreren Wiedereinschaltblöcken ein dritter Parameter verbunden ist, der einen oder mehrere blockspezifische Werte hat, und der Wiedereinschaltblock als Reaktion auf das Empfangen eines dem Wert des dritten Parameters des Blocks entsprechenden ersten Signals geschlossen wird.

## Revendications

1. Système pour commander des refermetures, le système comprenant au moins deux blocs de refermeture (B1 à B7 ; B10 à B1N), chaque bloc ayant des informations de temps de refermeture spécifiques au bloc prédéfinies associées à celui-ci, moyennant quoi le système est agencé pour générer un signal de commande pour fermer des moyens de commutation (30) capables d'effectuer une refermeture après que le temps correspondant aux informations de temps, associées au bloc de refermeture, s'est écoulé depuis le démarrage du bloc de refermeture en question, **caractérisé en ce que**
chaque bloc est agencé pour démarrer dans un ordre prédéfini ;
et **en ce que**
au moins un bloc de refermeture comprend un premier paramètre (P1) et un deuxième paramètre (P2), moyennant quoi le bloc de refermeture est agencé démarrer en réponse à la réception d'un premier signal correspondant à la valeur du premier paramètre et d'un deuxième signal correspondant à la valeur du deuxième paramètre, dans lequel
le premier signal indique un type de défaut ;
les blocs de refermeture (B1 à B7 ; B10 à B1N) sont agencés pour recevoir le premier signal d'un ou de plusieurs relais de protection (40) ; et
le deuxième signal indique un numéro d'ordre de la tentative de refermeture.

2. Système selon la revendication 1, **caractérisé en ce que** le premier paramètre (P1) et le deuxième paramètre (P2) dudit au moins un bloc de refermeture ont une ou plusieurs valeurs spécifiques au bloc prédéfinies.

3. Système selon la revendication 1 ou 2, **caractérisé en ce que** le système comprend un compteur (52) agencé pour compter le nombre de tentatives de refermeture et pour générer le deuxième signal sur la base du nombre.

4. Système selon l'une quelconque des revendications 1 à 3, **caractérisé en ce que** le système comprend des moyens (513) agencés pour sélectionner le bloc de refermeture qui a la priorité la plus élevée, lorsque deux blocs de refermeture (B1 à B7) ou plus démarrent essentiellement simultanément, moyennant quoi le système est agencé pour générer un signal de commande pour fermer les moyens de commutation (30) effectuant la refermeture après que le temps correspondant aux informations de temps associées au bloc de refermeture s'est écoulé depuis le démarrage du bloc de refermeture.

5. Système selon la revendication 4, **caractérisé en ce que** les blocs de refermeture ont un numéro d'ordre qui indique la priorité du bloc.

6. Système selon l'une quelconque des revendications 1 à 5, **caractérisé en ce que** les blocs de refermeture (B10 à B1N) sont agencés après le démarrage pour empêcher un démarrage essentiellement simultané de blocs de refermeture qui ont une priorité plus faible.

7. Système selon l'une quelconque des revendications 1 à 6, **caractérisé en ce que** le premier paramètre et/ou le deuxième paramètre des blocs de refermeture (B1 à B7 ; B10 à B1N) et/ou les informations de temps associées aux blocs de refermeture peuvent être fixés par l'utilisateur du système.

8. Système selon l'une quelconque des revendications 1 à 7, **caractérisé en ce que** le système comprend des informations spécifiques au bloc associées à chaque bloc (B1 à B7 ; B10 à B1N) concernant le nombre de pôles dans la refermeture, moyennant quoi le système est agencé pour générer un signal de commande pour fermer les moyens de commutation (30) conformément aux informations concernant le nombre de pôles.

9. Système selon l'une quelconque des revendications 1 à 8, **caractérisé en ce qu'**un ou plusieurs blocs de refermeture (B1 à B7 ; B10 à B1N) comprennent un troisième paramètre (P3) ayant une ou plusieurs valeurs spécifiques au bloc prédéfinies, moyennant quoi le bloc de refermeture est agencé pour se verrouiller en réponse à la réception d'un premier signal correspondant à la valeur du troisième paramètre.

10. Procédé pour commander des refermetures au moyen d'un système de commande comprenant au moins deux blocs de refermeture, chaque bloc ayant des informations de temps de refermeture spécifiques au bloc prédéfinies associées à celui-ci, moyennant quoi le procédé comprend l'étape :
de génération d'un signal de commande pour fermer les moyens de commutation (30) exécutant une refermeture après que le temps correspondant aux informations de temps associées au bloc de refermeture s'est écoulé depuis le démarrage du bloc de refermeture en question, **caractérisé par** le démarrage des blocs de refermeture dans un ordre prédéfini, et en ce que ledit au moins un bloc de refermeture comprend un premier paramètre et un deuxième paramètre, moyennant quoi l'étape de démarrage des blocs de refermeture dans un ordre prédéfini comprend l'étape :
de démarrage du bloc de refermeture en réponse à la réception d'un premier signal correspondant à la valeur du premier paramètre d'un ou de plusieurs relais de protection et d'un deuxième signal correspondant à la valeur du deuxième paramètre, dans lequel
le premier signal indique un type de défaut, et le deuxième signal indique un numéro d'ordre de la tentative de refermeture.

11. Procédé selon la revendication 10, **caractérisé en ce que** les premier et deuxième paramètres dudit au moins un bloc de refermeture ont une ou plusieurs valeurs spécifiques au bloc prédéfinies.

12. Procédé selon la revendication 10 ou 11, **caractérisé par** le comptage du nombre de tentatives de refermeture effectuées et la génération du deuxième signal sur la base du nombre.

13. Procédé selon l'une quelconque des revendications 10 à 12, **caractérisé par** la sélection du bloc de refermeture qui a la priorité la plus élevée, lorsque deux blocs de refermeture ou plus démarrent essentiellement simultanément, moyennant quoi un signal de commande pour fermer les moyens de commutation effectuant la refermeture est généré après que le temps correspondant aux informations de temps associées au bloc de refermeture s'est écoulé depuis le démarrage du bloc de refermeture.

14. Procédé selon la revendication 13, **caractérisé en ce que** les blocs de refermeture ont des numéros d'ordre, et le bloc ayant la priorité la plus élevée est sélectionné sur la base du numéro d'ordre.

15. Procédé selon l'une quelconque des revendications 10 à 14, **caractérisé par** la prévention, lorsque le bloc de refermeture est démarré, d'un démarrage essentiellement simultané de blocs de refermeture ayant une priorité plus faible.

16. Procédé selon l'une quelconque des revendications 10 à 15, **caractérisé par** l'insertion dans chaque bloc d'informations spécifiques au bloc concernant le nombre de pôles dans la refermeture, et en ce que le signal de commande pour fermer les moyens de commutation qui effectuent la refermeture est généré conformément aux informations concernant le nombre de pôles.

17. Procédé selon l'une quelconque des revendications 10 à 16, **caractérisé par** l'association à un ou plusieurs blocs de refermeture d'un troisième paramètre ayant une ou plusieurs valeurs spécifiques au bloc, et le verrouillage du bloc de refermeture en réponse à la réception d'un premier signal correspondant à la valeur du troisième paramètre du bloc.
